# EUROPEAN PATENT SPECIFICATION

(11) **EP 0 704 326 B1**
(45) Date of publication and mention of the grant of the patent: **29.03.2000**
(21) Application number: 95306787.3
(22) Date of filing: 26.09.1995
(51) Int. Cl.: B60C 23/06, B60C 23/00

(54) **Tyre Deflation Alarm Apparatus**
Einrichtung zur Anzeigung von Reifendruckverlust
Appareil de signalisation du dégonflement d'un pneumatique

(30) Priority: 27.09.1994 JP 23162294
(43) Date of publication of application: 03.04.1996
(73) Proprietor: SUMITOMO RUBBER INDUSTRIES LIMITED, Kobe-shi, Hyogo-ken (JP); SUMITOMO ELECTRIC INDUSTRIES, LTD, Osaka-shi, Osaka-fu 541 (JP)
(72) Inventor: Horie, Hiroto, Akashi-shi, Hyogo-ken (JP)
(74) Representative: Stewart, Charles Geoffrey

(56) References cited:
- EP-A- 0 601 556
- DE-A- 3 718 471
- DE-A- 4 426 734
- FR-A- 2 680 137
- PATENT ABSTRACTS OF JAPAN vol. 013 no. 500 (M-891) ,10 November 1989 & JP-A-01 202506 (NISHIKAWA TIRE KK) 15 August 1989,
- Weishaupt, W., Proske, A., Tigges, M.: "Instrumentierung und Informationssysteme in BMW-Fahrzeugen"; VDI-Berichte 612: Elektronik im Kraftfahrzeugbau; VDI-Verlag GmbH; Düsseldorf (DE); 09./10.

## Description

The present invention relates to a tyre deflation alarm apparatus for signalling or giving an alarm for tyre deflation and more particularly to an apparatus for signalling tyre deflation which warns a driver of a possibility that air pressure of a tyre that has been set to a prescribed normal pressure is lowered to a dangerous value.

In general, the pressure of an air-filled tyre drops due to abrupt factors such as puncture or valve damage. However, drop of air pressure might be caused by natural factors such as air leak from an inner liner other than abrupt factors, so that the air pressure might have been reduced to a dangerous value without one realising. When one continues driving in such a state, the tyre is deformed too much and generates excessive heat, and, at the worst, might burst to cause a serious accident. Thus, there have been proposed many apparatuses that warn of abnormal air pressure of a tyre.

For example, JP-A-4-271907 discloses a method in which the inside pressure drop is detected from a relative difference in the number of revolutions of tyres, and JP-U-54-115958 discloses a method in which the pressure of a tyre is directly detected.

However, the method in which the inside pressure drop is detected from a relative difference in the number of revolutions as disclosed in JP-A-4-271907 poses a problem in that it is impossible to detect the pressure drop in the case where the pressure of all the tyres is reduced similarly.

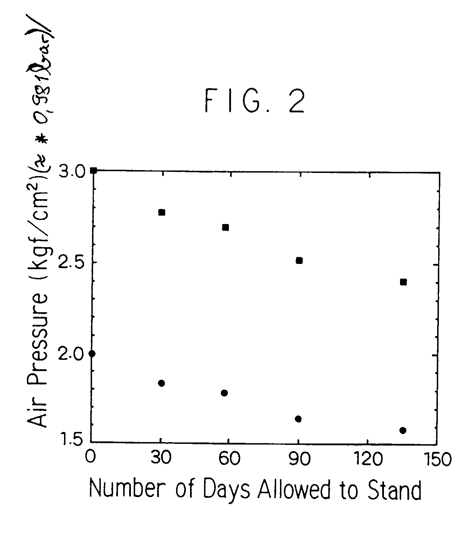

In fact, when the air pressure reaches a dangerous value by natural course, it is impossible to detect the pressure drop with the method because the air pressure of four wheels drops with approximately a uniform inclination as shown in Figure 2.

Table 1 shows the degree of air pressure drop of a tyre due to a natural factor, indicating the relationship between the number of days allowed to stand and the air pressure.

**Table 1**

| Tyre Size: 185/65R14 | | |
|---|---|---|
| Number of days allowed to stand | Air pressure (kgf/cm²) | |
| 0 | 2.00 (≈ 1,96 bar) | 3.00 (≈ 2,94 bar) |
| 30 | 1.84 (≈ 1,80 bar) | 2.78 (≈ 2,72 bar) |
| 58 | 1.79 (≈ 1,75 bar) | 2.70 (≈ 2,65 bar) |
| 90 | 1.65 (≈ 1,62 bar) | 2.52 (≈ 2,47 bar) |
| 135 | 1.59 (≈ 1,56 bar) | 2.41 (≈ 2,36 bar) |

Figure 2 is a graphical representation of Table 1. As shown in Figure 2, it is expected that the inside pressure of an air-filled tyre spontaneously drops by at least 0.5 bar in 6 months only being allowed to stand. Thus, there is enough of a possibility that the air pressure of all four wheels similarly drops to a dangerous value even if they are not punctured. On occasions, it is impossible to detect an abnormality with a method in which the inside pressure drop is defected from a relative difference in the number of revolutions of tyres.

Moreover, the method disclosed in JP-U-54-115958 in which the air pressure of a tyre is directly detected requires high cost since sensors corresponding to the number of tyres are necessary, and poses a problem that the measured value lacks in reliability since it is necessary to set a slip ring or the like to connect the sensor to a rolling element, i.e. a tyre.

Further EP-A-0601556 discloses a method of monitoring the inflation pressure of the tyres of a vehicle equipped with a centralised inflation installation which is capable of effecting measurements of instantaneous pressure on each tyre, comparing the values thus measured with the scheduled pressure of each tyre and adjusting the pressure if the difference exceeds a certain threshold. In this method the installation on the vehicle memorises the date of pressure adjustments and in the event that an adjustment was not due to a change in the scheduled pressure the installation compares the date of the adjustment with that of the preceding adjustment and triggers an alarm if the time between the two dates is less than a predetermined value. However such centralised inflation and instantaneous pressure measuring installations on vehicles are expensive and not widely available.

The present invention was made to solve the above-mentioned problems, and therefore it is an object of the present invention to provide an economical apparatus for alarming tyre deflation capable of warning a person of the possibility of long term air pressure drop of a tyre.

In accordance with the present invention, there is provided a tyre deflation alarm apparatus adapted to be provided on a vehicle utilising air-filled tyres, comprising a timer which measures the elapsed time from when the air pressure of a tyre has been set to a prescribed normal value, a reset switch for resetting the timer to zero, an alarm part connected to the timer and designed to give an alarm after the elapsed time reaches a predetermined time period which is the time taken for the air-pressure in the tyre to drop by natural factors from the prescribed normal value to a potentially dangerous value, and a backup battery and charging circuit connected to the timer so that the elapsed time can be measured when the power is cut off, by means of the backup battery and charging circuit.

A backup battery and a charging circuit are connected to the timer. So the period of time can be measured, even with reliable power cut off by means of the backup battery charged by the charging circuit. It is also desirable that the period of time measured by the time is 6 months.

In the apparatus for alarming tyre deflation of the present invention, the period of time from when an air pressure of a tyre has been set to a prescribed normal pressure till when the air pressure drops to reach a dangerous value is assumed beforehand and then, the period of time is measured by the timer to be informed to a driver by the alarm part. The reset switch allows reset of the timer to zero hour.

When a backup battery and a charging circuit are connected to the timer, the timer power supply is prevented from being cut off by the battery backup so that it is possible to continuously measure the period of time even if the engine is not running.

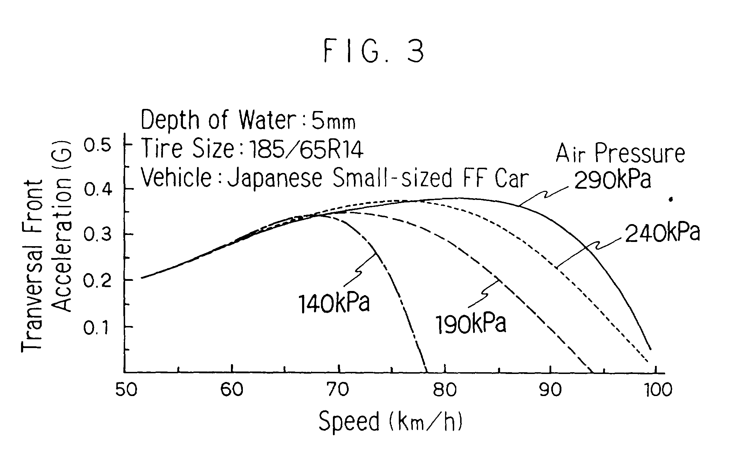

As shown in Figure 2, the 2.0 bar pressure commercially prescribed for a car tyre normally drops to about 1.5 or 1.4 bar pressure in 6 months so that, assuming that the period of time the timer measures is 6 months, it is possible to inform the driver of the danger of slippage during cornering due to reduction in the cornering performance caused by this pressure drop. This effect is shown in Figure 3.

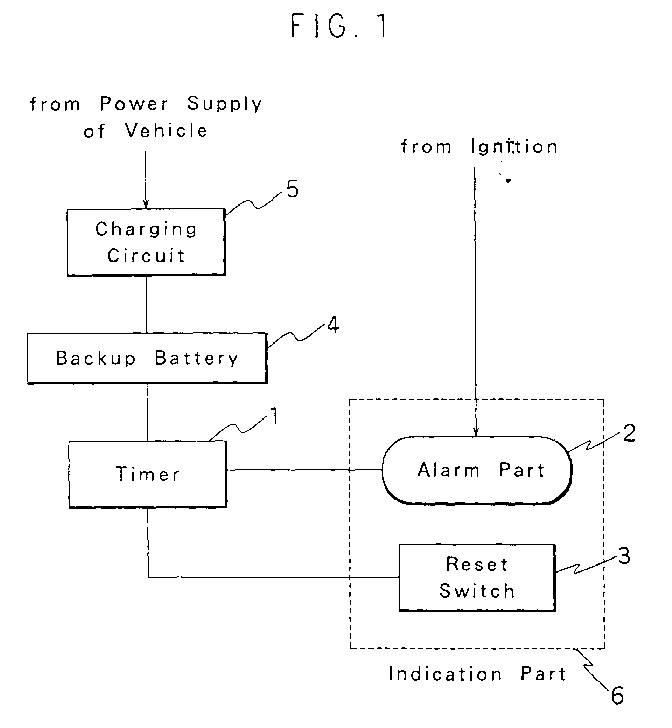

The invention will now be described in more detail in conjunction with the following diagrammatic drawings in which:-
Figure 1 shows a circuit diagram of an apparatus for signalling tyre deflation of the present invention;
Figure 2 shows the degree of air pressure drop; and
Figure 3 shows the relationship between speed and transversal front acceleration in relation to difference in air pressure.

The apparatus comprises a timer 1, an alarm part 2, a reset switch 3, a backup battery 4, and a charging circuit 5.

A digital circuit with low power consumption wherein an oscillator is combined with a plurality of counter ICs can be used for the timer 1 to measure a period of time where the tyre's air pressure that is assumed on the basis of Table 1 and Figure 2 drops to approach a dangerous value. It is desirable that this period of time is set to 6 months. In general, it is expected that a tyre's air pressure drops by at least 0.5 bar in 6 months so that, when the air pressure of a tyre whose correct air pressure is 2.00 bar drops by 0.5 bar, the inside air pressure will be 1.5 bar which poses a problem in that the sidewalls of the tyre may then suffer elastic fatigue and be easily broken. Thus, it is necessary to urge the driver to take a suitable measure. Moreover, this period of 6 months is just an example of a desirable period so that the apparatus in the present invention is not limited to give an alarm in response to the elapse of a period of 6 months.

The alarm part 2 is provided to arouse the attention of the driver, and is connected to the timer 1. When the timer 1 counts 6 months, a switch in the alarm part 2 is turned on to give an alarm. It is possible to use visual indicators such as a warning lamp and multiple display, as an alarm, or to utilise aural effects such as a buzzer sound, electronic beep or a voice sound. A multiple display not only indicates one piece of information such as ON/OFF like a warning lamp, but is a display which can indicate multiple information by using characters and pictures.

The reset switch 3 is provided for resetting the timer 1 and, just after the inside pressure is adjusted to a normal value by replacing a tyre or supplying air, is used to reset the timer 1 to 0 hour.

It is desirable that the alarm part 2 and reset switch 3 are arranged within an indication part 6 to be provided in a position such as in front of the driver's seat of a vehicle, so that the driver may operate the reset switch 3 provided on the indication part 6 after completing the adjustment as described above.

Explained hereafter is the function of the apparatus for signalling tyre deflation constituted as described above. At first, the air pressure of the vehicle tyres is adjusted to the prescribed normal pressure. Then, the reset switch 3 is pressed, the timer 1 is reset, and the timer begins to count a period of time from 0 hour. From Table 1 and Figure 2, it is expected that the tyre's inside pressure will reach a potentially dangerous value when 6 months have elapsed after the air pressure was adjusted,. so that the timer 1 is set to measure 6 months beforehand. Thus, when 6 months have elapsed, the alarm part 2 gives an alarm.

However, it is necessary to continue counting without being cleared even when the ignition is turned off or the battery is disconnected so that it is necessary for the timer 1 to be constantly powered. For that reason, the apparatus must be equipped with the backup battery 4 and charging circuit 5 for that battery. The alarm part 2 then gives an alarm in accordance with alarm instruction from the timer 1 when the ignition is again turned on.

The apparatus for signalling tyre deflation of the present invention is capable of warning of the tyres air pressure drop that inevitably occurs when allowed to stand, and is very low-cost.

## Claims

1. A tyre deflation alarm apparatus adapted to be provided on a vehicle utilising air-filled tyres, comprising a timer (1) which measures the elapsed time from when the air pressure of a tyre has been set to a prescribed normal value, a reset switch (3) for resetting the timer (1) to zero, an alarm part (2) connected to the timer (1) and designed to give an alarm after the elapsed time reaches a predetermined time period which is the time taken for the air-pressure in the tyre to drop by natural factors from the prescribed normal value to a potentially dangerous value, and a backup battery (4) and charging circuit (5) connected to the timer (1) so that the elapsed time can be measured when the power is cut off, by means of the backup battery (4) and charging circuit (5).

2. An apparatus according to claim 1, characterised in that the predetermined period of time after which an alarm is given is 6 months.

## Patentansprüche

1. Vorrichtung zum Alarmieren bei Reifendruckverlust, die zur Bereitstellung an einem Fahrzeug ausgebildet ist, das luftgefüllte Reifen verwendet, umfassend ein Zeitglied (1), das die verstrichene Zeit mißt, seit wann der Luftdruck eines Reifens auf einen vorgeschriebenen Normalwert eingestellt worden ist, einen Rücksetzschalter (3), um das Zeitglied (1) auf Null zurückzusetzen, einen Alarmteil (2), der mit dem Zeitglied (1) verbunden und dafür entworfen ist, einen Alarm auszugeben, nachdem die verstrichene Zeit eine vorherbestimmte Zeitdauer erreicht, welche die Zeit ist, die der Luftdruck in dem Reifen benötigt, um durch natürliche Faktoren von dem vorgeschriebenen Normalwert auf einen potentiell gefährlichen Wert abzufallen, und eine Hilfsbatterie (4) und eine Ladeschaltung (5), die mit dem Zeitglied (1) verbunden sind, so daß die verstrichene Zeit mittels der Hilfsbatterie (4) und der Ladeschaltung (5) gemessen werden kann, wenn der Netzstrom abgeschnitten ist.

2. Vorrichtung nach Anspruch 1, dadurch gekennzeichnet, daß die vorherbestimmte Zeitdauer, nach der ein Alarm ausgegeben wird, 6 Monate beträgt.

## Revendications

1. Appareil d'alarme en cas du dégonflement, destiné à être monté sur un véhicule ayant des pneumatiques remplis d'air, comprenant une minuterie (1) qui mesure le temps écoulé depuis le moment où la pression de l'air d'un pneumatique a été réglée à une valeur normale prescrite, un interrupteur de réarmement (3) destiné à remettre la minuterie (1) à zéro, une partie d'alarme (2) connectée à la minuterie (1) et destinée à donner une alarme après que le temps écoulé a atteint une valeur prédéterminée qui est le temps nécessaire pour que la pression de l'air dans le pneumatique diminue naturellement de la valeur normale prescrite à une valeur potentiellement dangereuse, et une batterie de secours (4) et un circuit de charge (5) connectés à la minuterie (1) afin que le temps écoulé puisse être mesuré lorsque l'alimentation est interrompue, grâce à la batterie de secours (4) et au circuit de charge (5).

2. Appareil selon la revendication 1, caractérisé en ce que la période prédéterminée après laquelle une alarme est transmise est égale à six mois.
